# EUROPÄISCHE PATENTSCHRIFT

(11) **EP 0 915 755 B1**
(45) Veröffentlichungstag und Bekanntmachung des Hinweises auf die Patenterteilung: **17.10.2001**
(21) Anmeldenummer: 97936563.2
(22) Anmeldetag: 23.07.1997
(51) Int. Cl.: B32B 11/04, D06N 5/00, E04D 5/10

(54) **BITUMENBAHN**
BITUMEN FELT
FEUTRE BITUMINE

(30) Priorität: 01.08.1996 DE 29613310 U
(43) Veröffentlichungstag der Anmeldung: 19.05.1999
(73) Patentinhaber: ICOPAL GmbH, 59368 Werne (DE)
(72) Erfinder: HOLBEK, John, DK-2800 Lyngby (DK); WORRE, Kim, DK-2791 Dragör (DK); HANSEN, Sven, Dahl, DK-4652 Haarlev (DK); GRAAE, Niels, D-59368 Werne (DE); BIRKNER, Christian, F-57380 Faulquemont (FR)
(74) Vertreter: Feder, Wolf-Dietrich, Dr. Dipl.-Phys.
(86) Internationale Anmeldenummer: DE9701586
(87) Internationale Veröffentlichungsnummer: WO9805495

(56) Entgegenhaltungen:
- DE-A- 2 735 823
- DE-C- 3 413 264
- DE-C- 4 022 338

## Beschreibung

Die Erfindung betrifft eine Bitumenbahn mit mehreren Bitumenschichten, die eine Trägerschicht und mindestens zwei an einer ersten Seite der Trägerschicht übereinander aufgebrachte Bitumenschichten aufweist. Derartige Bitumenbahnen sind an sich bekannt und beispielsweise in DE 27 35 823 A1 beschrieben. Ein Verfahren zur Herstellung einer solchen Bitumenbahn ist beispielsweise in DE 34 13 264 C2 beschrieben.

Standard-Bitumenbahnen bestehen aus einer Trägereinlage, die mit Bitumen oder Polymerbitumen getränkt und beidseitig mit Deckschichten versehen ist. Diese Deckschichten bestehen beispielsweise aus gefülltem Oxydbitumen, Polymerbitumen modifiziert mit thermoplastischen Polymeren (SBS) oder Polymerbitumen modifiziert mit thermoplastischen Kunststoffen (APP). Eine gute Abdichtung mittels einer Bitumenbahn muß im wesentlichen zwei wichtige Funktionen erfüllen. Die Bahn muß durch die meist beidseitige Beschichtung der Trägerschicht dauerhaft die Funktion Dichtigkeit gewährleisten. Diese Funktion wird durch die Verwendung hochwertiger polymermodifizierter Beschichtungen gegeben. Zusätzlich ist die Qualität der Verbindung an den Überlappungen ein sehr wichtiger Punkt. Gute Eigenschaften der SBS-polymermodifizierten Beschichtungen sind die Elastizität und das gute Kaltbiegeverhalten. Diese Eigenschaften sind bei einer beidseitig beschichteten Bahn gegeben. Sie entsprechen aber nicht immer den besten Ergebnissen für eine gute Verschweißung oder Verklebung der Überlappungen. Ein Nachteil der SBS-modifizierten Beschichtungen besteht darin, daß bei der Verlegung dieser Bahnen im Schweißverfahren hohe Energie benötigt wird, um die Beschichtung zu verflüssigen. Dies bedeutet, daß zu einer sicheren Verschweißung die Schichten so aufgeheizt werden müssen, daß es zu Beschädigungen der Trägereinlage kommen kann.

Um diesen Nachteil zu beheben, ist es beispielsweise bekannt, eine zusätzliche Bitumenschicht auf die Unterseite der Bahn aufzubringen (s. DE 34 13 264 C2). Diese zusätzliche Schicht wird dann so ausgewählt, daß bei der Herstellung ihre Viskosität um mindestens 6000 mm²/sec. niedriger liegt als diejenige der direkt unter der Trägereinlage liegenden Schicht. Ein Vorteil dieser Lösung besteht darin, daß beim Verschweißen die notwendige Temperatur der Schweißschicht geringer gehalten werden kann. Die Gefahr einer Beschädigung der Trägereinlage wird somit bedeutend reduziert. Die Stärke dieser zusätzlichen Schicht wird so ausgewählt, daß ausreichend Bitumen zum Verschweißen vorhanden ist, aber nicht mehr, um die Mehrkosten so gering wie möglich zu halten. Die Praxis hat gezeigt, daß für eine gute Verschweißbarkeit die Dicke dieser zusätzlichen Schicht auf mindestens 0,8 mm gehalten werden soll.

Bei den bekannten Bitumenbahnen können auch an beiden Seiten der Trägerschicht zwei übereinander aufgebrachte Bitumenschichten vorhanden sein. Ebenso ist es möglich, auf einer Seite der Trägerschicht zwei übereinander aufgebrachte Bitumenschichten anzuordnen, während sich auf der anderen Seite der Trägerschicht nur eine Bitumenschicht befindet.

Bei der Verlegung werden derartige Bitumenbahnen derart nebeneinander angeordnet, daß sie sich an den aneinander angrenzenden Randbereichen in einem Streifen vorgegebener Breite überlappen. In diesem Überlappungsbereich werden die nebeneinander liegenden Bahnen dann miteinander verklebt bzw. verschweißt. Hierbei wurde als Nachteil festgestellt, daß die Verbindung der gut schweißbaren unteren Schicht mit der schwer schweißbaren oberen Schicht oft nicht optimal ist und zu einer mangelhaften Verbindung der Bahnen führt. Dies konnte anhand von Schälversuchen festgestellt werden.

Der Erfindung liegt die Aufgabe zugrunde, eine Bitumenbahn der eingangs erwähnten Art so auszubilden, daß bei dauerhafter Abdichtungsqualität eine Optimierung der Haftung im Nahtbereich erreicht werden kann.

Die Lösung dieser Aufgabe erfolgt bei einer erfindungsgemäßen Bitumenbahn mit den Merkmalen aus dem kennzeichnenden Teil des Patentanspruchs 1. Vorteilhafte Weiterbildungen der erfindungsgemäßen Bitumenbahn sind in den abhängigen Ansprüchen beschrieben. Anspruch 6 betrifft ein Verfahren zum Verlegen der erfindungsgemäßen Bitumenbahn.

Bei der erfindungsgemäßen Ausbildung der Bitumenbahn liegen bei der Verlegung der Bahnen mit einander überlappenden Randbereichen in diesen Randbereichen Schichten aus gleichem Bitumenmaterial direkt aufeinander. Es werden also bei der Verschweißung oder Verklebung der Nähte im Überdeckungsbereich gleiche Beschichtungsmassen miteinander verbunden. Dies bedeutet eine Optimierung der Haftung im Nahtbereich. Dadurch, daß in diesem Nahtbereich gleich gut verschweißbare Schichten mit einander verbunden werden, wird eine besonders gute Dichtheit gewährleistet.

Die gewünschte Qualität derartiger Bitumenschichten kann erreicht werden, indem hochwertige Harze beigemischt werden. Auf diese Weise kann bei einer SBS-Polymerbitumenschicht nicht nur die Viskosität erheblich reduziert werden, sondern ihr Erweichungspunk wird gleichzeitig um mindestens 10°K gesenkt.

Mit weniger Energieaufwand verflüssigen sich die beiden Bitumenschichten an beiden Seiten der Überlappungsfläche mit gleicher Geschwindigkeit und ergeben eine optimale Verbindung. Von besonderer Bedeutung ist die erfindungsgemäße Bitumenbahn in Fällen, wo die Bitumenbahnen einlagig verlegt werden, da dann die Dichtheit der Schweißnaht noch mehr Bedeutung gewinnt.

Die Breite des entlang der Längskante aufgebrachten Streifens wird so gewählt, daß sie im wesentlichen dem Überdeckungsbereich entspricht.

Bei einer vorteilhaften Ausführungsform der Bitumenbahn ist an der zweiten Seite der Trägerschicht mindestens eine Bitumenschicht angeordnet, auf deren Außenseite der Streifen entlang der Längskante der Bahn aufgebracht ist. Dabei kann die äußerste an der zweiten Seite der Trägerschicht angeordnete Bitumenschicht an ihrer Außenseite in den Bereichen außerhalb des Streifens mit einer Schutzschicht bedeckt sein. Die Schutzschicht kann entweder eine übliche Abstreuung aus Schieferplättchen, Granulat oder dergleichen oder eine Folie aus Metall, Kunststoff oder einem Vlies sein.

Im folgenden wird anhand der beigefügten Zeichnung ein Ausführungsbeispiel für eine Bitumenbahn nach der Erfindung näher erläutert.

In der Zeichnung zeigt:
Fig. 1A und 1B in stark schematisierter und vergrößerter Darstellung einen Schnitt durch zwei Ausführungsformen einer Bitumenbahn im Bereich ihrer einen Längskante.
Fig. 2 ebenfalls in stark schematisierter, aber weniger vergrößerter Darstellung eine Seitenansicht von drei überlappend verlegten Bitumenbahnen nach Fig. 1A, gesehen in deren Längsrichtung.

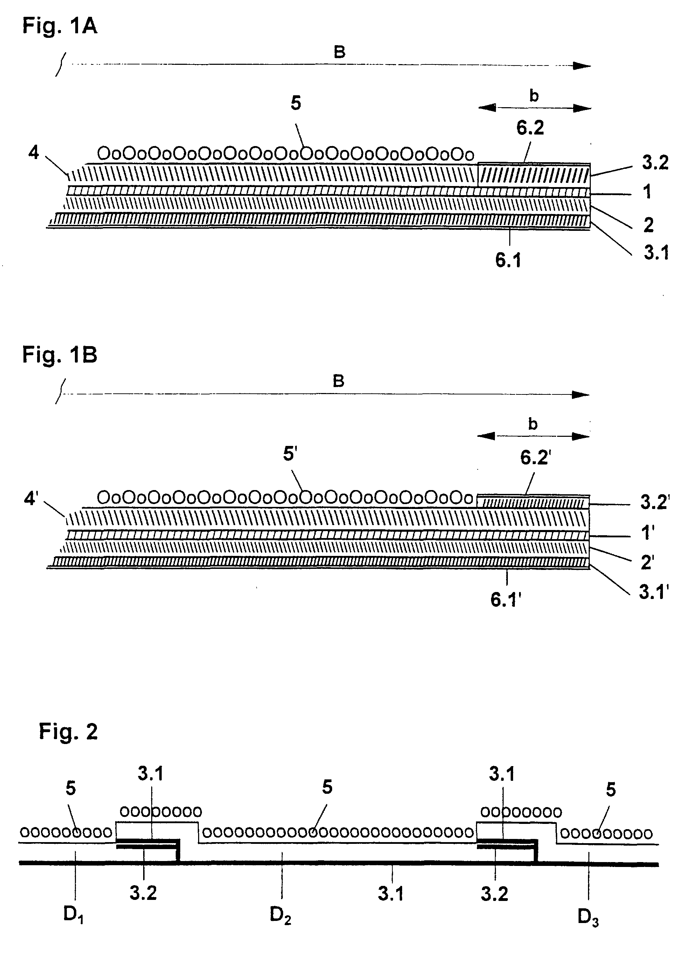

Die in Fig. 1A dargestellte Bahn besitzt eine Trägerschicht 1, an der auf der in Fig. 1A unteren Seite zunächst eine innere Bitumenschicht 2 aufgebracht ist. An dieser unteren Seite, die auch bei der Verlegung die untere Seite darstellt, ist weiterhin eine zweite äußere Bitumenschicht 3.1 aufgebracht. An der in Fig. 1A oberen Seite, die auch bei der Verlegung die Oberseite bildet, ist im Randbereich entlang der einen Längskante der Bahn ein Streifen 3.2 aus einer Bitumenschicht aufgebracht, dessen Breite b klein gegen die Gesamtbreite B der Bahn ist und der aus dem gleichen Bitumenmaterial besteht, wie die äußerste Bitumenschicht 3.1 an der Unterseite der Bahn. Angrenzend an diesen Streifen 3.2 ist an der Oberseite der Trägerschicht 1 eine weitere Bitumenschicht 4 aufgebracht, die sich von der Angrenzungsstelle an den Streifen 3.2 bis zu der in Fig. 1A nicht dargestellten anderen Längskante der Bahn erstreckt. Die Bitumenschicht 4 besteht aus einem anderen Bitumenmaterial als die Bitumenschicht 3.1 und der Streifen 3.2. Die Bitumenschichten 2 und 4 können aus dem gleichen oder aus verschiedenen Materialien bestehen. Bestehen sie aus verschiedenen Materialien, so können auch die Bitumenschichten 2 und 3.1 aus dem gleichen Material bestehen. Die Bitumenschicht 3.1 und der Streifen 3.2 sind an ihrer Außenseite in üblicher Weise mit einer Trennschicht 6.1 bzw. 6.2 versehen, die beispielsweise aus Talkum, Sand oder einer Folie bestehen kann, die in üblicher Weise bei der Verlegung entfernt wird.

Im Bereich außerhalb des Streifens 3.2 ist die Oberseite der unmittelbar auf der Trägerschicht 1 aufgebrachten Bitumenbahn 4 mit einer Abstreuung 5 versehen.

Bei der oben beschriebenen Anordnung hat es sich auch als vorteilhaft erwiesen, wenn die Bitumenschichten 2, 3.1 und 3.2 aus APP-Polymerbitumen bestehen, während die Bitumenschicht 4 aus SBS-Polymerbitumen besteht. Die Viskosität beim Schweißvorgang ist bei APP-Polymerbitumen wesentlich geringer als bei SBS-Polymerbitumen, obwohl der Erweichungspunkt bei einer höheren Temperatur liegt.

Fig. 1B zeigt eine andere Ausführungsform einer Bitumenbahn, die sich von der in Fig. 1A dargestellten Bahn lediglich in der Art der Anordnung des Randstreifens unterscheidet. Ansonsten entspricht die Bahn dem Aufbau nach Fig. 1A. In Fig. 1B sind für die einzelnen Schichten der Bahn die gleichen Bezugszeichen verwendet wie in Fig. 1A und lediglich mit einem Apostrophstrich versehen.

An der in Fig. 1B oberen Seite ist an der Oberseite der Trägerschicht 1' die weitere Bitumenschicht 4' aufgebracht, die sich über die volle Breite der Bahn erstreckt. Im Randbereich entlang der einen Längskante der Bahn ist der Streifen 3.2', welcher die Breite b aufweist und der aus dem gleichen Bitumenmaterial besteht wie die äußerste Bitumenschicht 3.1' an der Unterseite der Bahn auf die Oberseite der Bitumenschicht 4' aufgebracht.

Im folgenden werden Beispiele für einen möglichen Aufbau einer Bitumenbahn nach Fig. 1A und 1B gegeben, wobei die einzelnen Schichten durch die oben angegebenen Bezugsziffern charakterisiert werden.

### Beispiel 1: Polymerbitumenabdichtung als Oberlag (Fig. 1A)

- Schicht 1:: Trägereinlage aus Polyestervlies 250g imprägniert mit SBS-modifiziertem Bitumen;
- Schicht 2:: unterseitige Beschichtung mit SBS-modifiziertem Bitumen;
- Schicht 3.1:: zusätzliche unterseitige Polymerbeschichtung wie Schicht 2 ohne Füllstoff und mit einem Zusatz von 5% Harz;
- Schicht 3.2:: Beschichtung am Überlappungsstreifen mit dem gleichen Material wie Schicht 3.1;
- Schicht 4:: oberseitige Beschichtung wie Schicht 2, aber mit 0,5% mehr SBS-modifiziertem Bitumen;
- Schicht 5:: Abstreuung aus Schieferplättchen;
- Schicht 6.1:: unterseitig aufkaschierte PE-Folie;
- Schicht 6.2:: aufkaschierter Streifen aus PP-Folie.

### Beispiel 2: Polymerbitumenabdichtung als Zwischenlage (Fig. 1A)

- Schicht 1:: Trägereinlage aus Glasvlies oder Glasgitter-Verbundträger imprägniert mit SBS-modifiziertem Bitumen;
- Schicht 2:: unterseitige Beschichtung mit SBS-modifiziertem Bitumen;
- Schicht 3.1:: zusätzliche unterseitige Beschichtung wie Schicht 2 ohne Füllstoff und mit einem Zusatz von 5% Harz;
- Schicht 3.2:: Beschichtung am Überlappungsstreifen mit dem gleichen Material wie Schicht 3.1;
- Schicht 4:: oberseitige Beschichtung wie Schicht 2;
- Schicht 5:: Aufkaschierung eines dünnen PP-Vlieses;
- Schicht 6.1:: unterseitig aufkaschierte PE-Folie;
- Schicht 6.2:: aufkaschierter Streifen aus PP-Folie.

Die weitere Entwicklung von Bitumenbahnen auf dem Abdichtungssektor strebt immer mehr den Einsatz von kaltselbstklebenden Bahnen an. Auch in diesem Falle können Bitumenbahnen der oben beschriebenen Art eingesetzt werden. Eine sichere Verklebung der Nähte im Überlappungsbereich und somit ihre dauerhafte Dichtheit wird auch hier gewährleistet, indem beim Verkleben Schichten mit gleicher Qualität in Kontakt kommen. Bei kaltselbstklebenden Beschichtungen können diese Schichten dünner hergestellt werden. Die zusätzliche Schicht 3.1 wird dann üblicherweise mit einer Stärke von 0,5 mm aufgebracht. Die Schicht 3.2 kann die gleiche Stärke aufweisen und kann auf der, in diesem Falle durchgehenden Schicht 4, in einem Streifen der Breite b aufgebracht sein.

### Beispiel 3: Polymerbitumenabdichtung als Zwischenlage (Fig.1B)

- Schicht 1':: Trägereinlage aus Glasvlies- oder Glasgitter-Verbundträger imprägniert mit SBS-modifiziertem Bitumen;
- Schicht 2':: unterseitige Beschichtung mit SBS-modifiziertem Bitumen;
- Schicht 3.1':: zusätzliche unterseitige kaltselbstklebende Beschichtung aus Polymerbitumen mit einem Zusatz von 10% einer Mischung aus verschiedenen Harzen;
- Schicht 3.2':: Beschichtung am Überlappungsstreifen mit dem gleichen Material wie Schicht 3.1;
- Schicht 4':: oberseitige Beschichtung wie Schicht 2;
- Schicht 5':: Aufkaschierung eines dünnen PP-Vlieses;
- Schicht 6.1':: unterseitig aufkaschierte silikonisierte PE-Folie, abziehbar bei der Verlegung;
- Schicht 6.2':: aufkaschierter Streifen aus silikonisierter PE-Folie, abziehbar bei der Verlegung.

### Beispiel 4: Polymerbitumenabdichtung als Oberlage (Fig. 1B)

- Schicht 1':: Trägereinlage aus Polyester-Vlies 250g imprägniert mit SBS-modifiziertem Bitumen;
- Schicht 2':: unterseitige Beschichtung mit APP-modifiziertem Bitumen;
- Schicht 3.1':: zusätzliche unterseitige Beschichtung wie Schicht 2';
- Schicht 3.2':: Beschichtung am Überlappungsstreifen wie Schicht 3.1';
- Schicht 4':: oberseitige Beschichtung mit SBS-modifiziertem Bitumen;
- Schicht 5':: Abstreuung aus Schieferplättchen;
- Schicht 6.1':: unterseitig aufkaschierte PE-Folie;
- Schicht 6.2':: aufkaschierter Streifen aus PP-Folie.

Bei der Verlegung werden die nebeneinanderliegenden Bitumenbahnen so angeordnet, daß beispielsweise die in der Zeichnung rechts anschließende Bitumenbahn mit ihrer unteren Oberfläche, also der Bitumenschicht 3.1, die dargestellte Bitumenbahn an ihrer Oberseite im Bereich der Breite b überlappt, so daß die Bitumenschicht 3.1 unmittelbar auf dem Streifen 3.2 aufliegt. In diesem Bereich findet dann eine homogene Verbindung der beiden Bahnen statt.

Diese Anordnung der Bitumenbahnen bei der Verlegung ist in sehr schematischer Weise in Fig. 2 dargestellt. Dabei ist aus zeichnerischen Gründen in den Überlappungsbereichen die dort auftretende Versetzung rechtwinklig dargestellt, obwohl hier natürlich ein schräg verlaufender Übergangsbereich besteht.

Es sind drei Bitumenbahnen D1, D2 und D3 im verlegten Zustand dargestellt, die sich in den aneinander an grenzenden Bereichen der Längskanten in der oben beschriebenen Weise überlappen derart, daß, wie am Übergangsbereich der Bitumenschicht D1 zu D2 angedeutet, ein Teil der jeweils an der Unterseite einer Bahn angeordneten Bitumenschicht 3.2 auf dem Streifen 3.1 der jeweils unten liegenden Bitumenbahn aufliegt, so daß die Verschweißung an dieser Stelle stattfinden kann. Die Oberseite ist, wie bereits beschrieben, mit der Abstreuung 5 versehen.

## Patentansprüche

1. Bitumenbahn mit mehreren Bitumenschichten, die eine Trägerschicht und mindestens zwei an einer ersten Seite der Trägerschicht übereinander aufgebrachte Bitumenschichten aufweist, **dadurch gekennzeichnet, daß** an der zweiten Seite der Trägerschicht (1) entlang der einen Längskante der Bahn ein Streifen (3.2) aus einer Bitumenschicht aufgebracht ist, dessen Breite (b) klein gegen die Breite (B) der Bahn ist und der aus dem gleichen Bitumenmaterial besteht wie die äußerste Bitumenschicht (3.1) an der ersten Seite der Trägerschicht (1).

2. Bitumenbahn nach Anspruch 1, **dadurch gekennzeichnet, daß** an der zweiten Seite der Trägerschicht (1) mindestens eine Bitumenschicht (4) angeordnet ist, die an den entlang der Längskante laufenden Bitumenstreifen (3.2) angrenzt, aus einem anderen Bitumenmaterial besteht wie dieser und sich von dort bis zur anderen Längskante der Bahn erstreckt.

3. Bitumenbahn nach Anspruch 1, **dadurch gekennzeichnet, daß** an der zweiten Seite der Trägerschicht mindestens eine Bitumenschicht angeordnet ist, auf deren Außenseite der Streifen entlang der Längskante der Bahn aufgebracht ist.

4. Bitumenbahn nach Anspruch 2 oder 3, **dadurch gekennzeichnet, daß** die äußerste an der zweiten Seite der Trägerschicht (1) angeordnete Bitumen schicht (4) an ihrer Außenseite in den Bereichen außerhalb des Streifens (3.2) mit einer Schutzschicht (5) bedeckt ist.

5. Bitumenbahn nach einem der Ansprüche 1 bis 4, **dadurch gekennzeichnet, daß** an der Außenseite der äußersten Bitumenschicht (3.1) und an der Außenseite des entlang der Längskante laufenden Streifens (3.2) ein Trennmittel (6.1, 6.2) aufgebracht ist.

6. Verfahren zum Verlegen von Bitumenbahnen nach einem der Ansprüche 1 bis 5, **dadurch gekennzeichnet, daß** man die Bitumenbahnen so anordnet, daß die zweite Seite jeder Bahn die Oberseite ist und daß jeweils an der Längskante der ersten Bitumenbahn (D1), entlang welcher der Bitumenstreifen (3.2) angeordnet ist, dessen Breite (b) klein gegen die Breite (B) der Bahn ist, die benachbarte zweite Bitumenbahn (D2) so aufgelegt wird, daß sie die erste Bitumenbahn (D1), an deren Oberseite im Bereich der Breite (b) des Bitumenstreifens (3.2) überlappt, so daß die unterste Bitumenschicht (3.1) der zweiten Bitumenbahn (D2) unmittelbar auf dem Streifen (3.2) aufliegt und die jeweils erste und zweite Bitumenbahn (D1, D2) im Überlappungsbereich miteinander verschweißt und verklebt werden.

## Claims

1. Bitumen web with a number of bitumen layers, which has a carrier layer and at least two bitumen layers deposited one on top of the other on a first side of the carrier layer, **characterised in that** there is deposited on the second side of the carrier layer (1), along one longitudinal edge of the web, a strip (3.2) made of a bitumen layer, the breadth (b) of which is small compared with the breadth (B) of the web and which consists of the same bitumen material as the outermost bitumen layer (3.1) on the first side of the carrier layer (1).

2. Bitumen web according to claim 1, **characterised in that** there is disposed, on the second side of the carrier layer (1), at least one bitumen layer (4) which adjoins the bitumen strip (3.2) running along the longitudinal edge, consists of a different bitumen material from the said bitumen strip, and extends from that point as far as the other longitudinal edge of the web.

3. Bitumen web according to claim 1, **characterised in that** there is disposed, on the second side of the carrier layer, at least one bitumen layer, on the outer side of which the strip is deposited along the longitudinal edge of the web.

4. Bitumen web according to claim 2 or 3, **characterised in that** the outermost bitumen layer (4), which is disposed on the second side of the carrier layer (1), is covered with a protective layer (5) on its outer side in the regions outside the strip (3.2).

5. Bitumen web according to one of claims 1 to 4, **characterised in that** a separating means (6.1, 6.2) is deposited on the outer side of the outermost bitumen layer (3.1) and on the outer side of the strip (3.2) running along the longitudinal edge.

6. Method of laying bitumen webs according to one of claims 1 to 5, **characterised in that** the bitumen webs are disposed in such a way that the second side of each web is the top side and that the neighbouring, second bitumen web (D2) is laid, in each case, on the longitudinal edge of the first bitumen web (D1), along which edge there is disposed the bitumen strip (3.2) whose breadth (b) is small compared with the breadth (B) of the web, in such a way that the said neighbouring, second bitumen web overlaps the first bitumen web (D1) on the top side of the latter in the region of the breadth (b) of the bitumen strip (3.2), so that the lowermost bitumen layer (3.1) of the second bitumen web (D2) lies directly on the strip (3.2) and the first and second bitumen webs (D1, D2) in each case are welded and stuck to one another in the overlapping region.

## Revendications

1. Nappe bitumée comprenant plusieurs couches bitumées, qui comporte une couche porteuse et au moins deux couches bitumées appliquées l'une sur l'autre sur un premier côté de la couche porteuse, **caractérisée en ce que** sur le deuxième côté de la couche porteuse (1), une bande (3.2) d'une couche bitumée est appliquée le long d'une bordure longitudinale de la nappe, dont la largeur (b) est petite par rapport à la largeur (B) de la nappe, et qui est constituée du même matériau bitumé que la couche bitumée (3.1) la plus extérieure sur le premier côté de la couche porteuse (1).

2. Nappe bitumée selon la revendication 1, **caractérisée en ce que** sur le deuxième côté de la couche porteuse (1) est disposée au moins une couche bitumée (4), adjacente à la bande bitumée (3.2) qui s'étend le long de la bordure longitudinale, qui est constituée d'un autre matériau bitumé que celle-ci et qui s'étend depuis cet emplacement jusqu'à l'autre bordure longitudinale de la nappe.

3. Nappe bitumée selon la revendication 1, **caractérisée en ce que** sur le deuxième côté de la couche porteuse est disposée au moins une couche bitumée, sur la face extérieure de laquelle est appliquée la bande le long de la bordure longitudinale de la nappe.

4. Nappe bitumée selon l'une ou l'autre des revendications 2 et 3, **caractérisée en ce que** la couche bitumée (4) la plus extérieure agencée sur le deuxième côté de la couche porteuse (1) est recouverte d'une couche protectrice (5) sur sa face extérieure et dans les régions à l'extérieur de la bande (3.2).

5. Nappe bitumée selon l'une des revendications 1 à 4, **caractérisée en ce qu'**un milieu séparateur (6.1, 6.2) est appliqué sur la face extérieure de la couche bitumée (3.1) la plus extérieure et sur la face extérieure de la bande (3.2) qui s'étend le long de la bordure longitudinale.

6. Procédé pour la pose de nappes bitumées selon l'une des revendications 1 à 5, **caractérisé en ce que** l'on dispose les nappes bitumées de telle manière que le deuxième côté de chaque nappe est la face supérieure, et **en ce que**, au niveau de la bordure longitudinale de la première nappe bitumée (D1) le long de laquelle est disposée la bande bitumée (3.2) dont la largeur (b) est petite par rapport à la largeur (B) de la nappe, la deuxième nappe bitumée voisine (D2) est ainsi posée qu'elle chevauche la première nappe bitumée (D1), sur sa face supérieure et dans la région de la largeur (b) de la bande bitumée (3.2), de sorte que la couche bitumée la plus inférieure (3.1) de la deuxième nappe bitumée (D2) est appliquée directement sur la bande (3.2), et ce que la première et la deuxième nappe bitumée respective (D1, D2) sont soudées et collées l'une à l'autre dans la zone de chevauchement.
